# EUROPÄISCHE PATENTANMELDUNG

(11) **EP 0 582 744 A1**
(43) Veröffentlichungstag der Anmeldung: **16.02.1994**
(21) Anmeldenummer: 92115921.6
(22) Anmeldetag: 17.09.1992
(51) Int. Cl.: G02B 6/44

(54) **Übertragungsstrecke für mit Lichtwellenleitern bestückte Anlagen**

(30) Priorität: 09.08.1992 DE 4226368
(71) Anmelder: SUHNER ELEKTRONIK GmbH, D-82024 Taufkirchen (DE); OSI KOMMUNIKATIONS- UND SYSTEMTECHNIK GmbH, D-89335 Ichenhausen (DE)
(72) Erfinder: Nar, Reinhold, W-8900 Augsburg 21 (DE); Wiesmüller, Bernhard, W-8351 Offenberg (DE); Spring, Karl-Heinz, W-8871 Gundremmingen (DE)
(74) Vertreter: Schön, Theodor, Patent- und Zivilingenieur

(57) **Zusammenfassung**

Vorgestellt wird eine Ausgestaltung einer Übertragungsstrecke für mit Lichtwellenleitern bestückte Anlagen, deren Verteiler- und Verbindungsstellen räumlich voneinander getrennt, insbesondere in verschiedenen Räumen eines Gebäudes, aufgestellt sind und aus jeweils eine Anzahl von einzelne Anschlußgehäuse (2) aufnehmenden Schränken oder Gestellen bestehen, wobei in jedes der Anschlußgehäuse jeweils ein zu einem Kabel (11) zusammengefasstes Lichtwellenleiterbündel mündet und die einzelnen Lichtwellenleiter des Bündels innerhalb des Anschlußgehäuses aufgeteilt und mit an einer Frontplatte des Anschlußgehäuses angeordneten Anschlußadaptern (26) oder dergl. Verbindungselementen verbunden sind, und die aus einer insgesamt vormontierten Einheit aus Lichtwellenleiterkabel und mit diesem zugfest verbundenen Anschlußgehäusen bzw. Verbindungselementen besteht.

## Beschreibung

Die Erfindung bezieht sich auf eine Übertragungsstrecke für mit Lichtwellenleitern bestückte Anlagen, deren Verteiler- und Verbindungsstellen räulich voneinander getrennt, insbesondere in verschiedenen Räumen eines Gebäudes aufgestellt, sind und aus jeweils eine Anzahl von einzelne Anschlußgehäuse aufnehmenden Schränken oder Gestellen bestehen, wobei in jedes der Anschlußgehäuse jeweils ein zu einem Kabel zusammengefasstes Lichtwellenleiterbündel mündet und die einzelnen Lichtwellenleiter des Bündels innerhalb des Anschlußgehäuses aufgeteilt und mit an einer Frontplatte des Anschlußgehäuses angeordneten Anschlußadaptern oder dergl. Verbindungselementen verbunden sind.

Im Rahmen der Aufstellung moderner Datenverarbeitungssysteme ist es erforderlich einzelne Baugruppen des Gesamtsystemes, wie Zentrale und Nebenstellen, in verschiedenen Räumlichkeiten, z.B. eines Gebäudes, aufzustellen und untereinander vermittels entsprechneder Leitungen zu verbinden, was gleichermaßen für die bekannten elektronisch arbeitenden und daher vermittels elektrisch leitender Metallleitungen als auch für an sich gleichfalls bekannten mit Lichtwellen arbeitenden und demzufolge mittels Lichtwellenleiter miteinander zu verbindende Anlagen gilt.
Bei der Installation von mit Lichtwellen arbeitenden Datenverarbeitungssystemen ergeben sich aus den materialcharakteristischen Eigenschaften der üblicherweise aus Glasfasern bestehenden Lichtwellenleiter eine Reihe von Sonderproblemen, die im wesentlichen auf der vergleichsweise geringen Zugfestigkeit von Glasfasern und in Verbindung damit auch auf der hohen Knickempfindlichkeit von Glasfasern sowie der extremen Beeinflußung von Verbindungen von Lichtwellenleitern durch Umwelteinflüsse sowie den Besonderheiten der für die Glasfasern der Lichtwellenleiter anzuwendenden Arbeitsweise z.B. beim Verbinden der Glasfaser mit einem Kupplungsteil, z.B. einem Steckerteil, beruhen. Hinzu kommt noch die stark unterschiedliche Wärmedehnung zwischen Kunststoffen und Glasfasern, welche in Anbetracht der Bruchgefährlichkeit von Glasfasern besondere, bei Metallleitern nicht erforderliche, besondere Anordnungen vorraussetzt.

In der bekannten und herkömmlichen Weise des Anschlußes von Lichtwellenleitern an Verteilereinrichtungen bzw. Verteilerschränke bzw. an in diese einsetzbare Anschlußgehäuse für ankommende und abgehende Lichtwellenleiter werden, wie dies z.B. aus der GB-PS 2 166 262 ersichtlich ist, die einzelnen in Form des Kabels gruppenweise in das Anschlußgehäuse eingeführten Lichtwellenleiter jeweils vor Ort über einen dem Ausgleich der Wärmedehnung dienenden Längenspeicher geführt und einzeln mit den jeweils zugehörigen Verbindungselementen verbunden, wozu es erforderlich ist jeden einzelnen der Lichtwellenleiter am Montageort mindestens im Anschlußbereich einzeln von seiner Umhüllung zu befreien und unter Anwendung der hierfür bekannten Techniken mit dem zugehörigen Verbindngselement zu koppeln, woraus ein erheblich Zeit- und Arbeitsaufwasnd des Monteurs vor Ort resultiert und woraus ferner erhebliche Probleme hinsichtlich der Sicherung der gesamten Datenverarbeitungsanlage gegen möglichen Mißbrauch resultieren, so daß nicht nur die Installation an sich, sondern zusätzlich auch noch die Sicherheitsüberwachung einen erheblichen Aufwand bedingen.

Der Erfindung liegt daher die Aufgabe zugrunde eine Übertragungsstrecke für mit Lichtwellenleitern arbeitende Anlagen deren einzelne Stationen räumlich voneinander getrennt und insbesondere in verschiedenen Räumen eines Gebäudes untergebracht sind, zu schaffen, welche insgesamt, d.h. beidendig mit allen Anschlußmitteln, werksseitig vorgefertigt und als vorgefertigte Einheit geliefert sowie vor Ort als komplett vormontierte Einheit installiert werden kann, in der Weise, daß vor Ort keinerlei Montagearbeiten mehr anfallen. Darüberhinaus ist es auch Ziel der Erfindung die Übertragungseinheit so auszubilden daß die Anschlußgehäuse in beliebiger Weise von dessen Vorderoder Rückseite her in den Schrank bzw. das Regal eingesetzt werden können.

Diese Aufgabe wird erfindungsgemäß im Wesentlichen dadurch gelöst, daß die Übertragungsstrecke aus einer insgesamt vormontierten Einheit aus Lichtwellenleiterkabel und mit diesem zugfest verbundenen Anschlußgehäusen bzw. Verbindungselementen besteht, wobei die zugfeste Verbindung des Kabels mit dem oder den schalenförmigen Anschlußgehäuse(n) bzw. dem oder den Verbindungselement(en) durch einen Aufteiler gebildet ist, welcher einerseits vermittels eines radial gerichteten Flansches an einer der Stirnwandungen des Anschlußgehäuses bzw. des Verbindungselemetes abgestützt ist und in welchem andererseits die zugfeste Einlage des Kabels, insbesondere das sog. Keflar, zugfest festgelegt ist.
Eine solchermaßen aufgebaute Übertragungsstrecke kann samt aller erforderlichen Anschlußmittel werksseitig in einer solchen Weise vormontiert werden, daß zum einen vor Ort nur noch die Befestigung der Anschlußgehäuse in einem dafür vorgesehenen Schrank oder dergl. vorgenommen werden muß und daß zum anderen das jeweils in Installationsrichtung vorne liegende Anschlußgehäuse bzw. Verbindungselement lediglich in einer sog. Einziehverkappung aufgenommen werden muß, um die Übertragungsstrecke im Zuge deren Installation erforderlichenfalls durch Wandungs-oder Deckendurchbrüche innerhalb des Gebäudes hindurchziehen zu können. Die erfindungsgemäße Verwendung eines als separates Bauteil herstellbaren und zugfest mit dem Lichtwellenleiterkabel verbindbaren sowie nach seiner Verbindung mit dem Kabel mit dem Anschlußgehäuse verbindbaren Aufteilers ermöglicht dabei vorteilhafterweise eine sehr raumsparende Ausbildung der Anschlußgehäuse, so daß die für die Installation der Übertragungsstrecke erforderlichen Wandungsoder Deckendurchbrüche des Gebäudes lediglich einen vergleichsweise kleinen, insbesondere mittels eines rotierend arbeitenden Schneidwekzeuges herstellbaren Durchmesser aufzuweisen brauchen. Dies ergibt eine wesentliche Erhöhung der Funktionssicherheit aller Einzelanschlüße der Übertragungsstrecke, da diese vor Auslieferung bzw. Installation werkseitig durchgemessen werden kann. Ferner erübrigt die erfindungsgemäß Ausbildung einer komplett vormontierten Übertragungsstrecke auch alle Montagearbeiten vor Ort, so daß für die Installation einer mit Lichtwellenleitern ausgestatteten Anlage vor Ort nur noch ein Bruchteil der bisher erforderlichen Monteur-Arbeitszeit anfällt und darüberhinaus alle die bisher aus Datenschutzgründen erforderlichen Sicherheitsvorkehrungen gegen einen möglichen Mißbrauch der Anlage entfallen können.

In einer bevorzugten Verwirklichungsform der Erfindung ist hinsichtlich der Ausbildung des die zugsichere Verbindung von Lichtwellenleiterkabel und Anschlußgehäuse vermittelnden Aufteilers vorgesehen, daß dieser aus einem Gehäuse mit einem zylindrischen Kabeleinführungsraum und einem kegelförmigen Aufteilerraum besteht, wobei im zylindrischen Kabeleinführungsraum eine vermittels Schrauben spannbare Klemmschelle zur möglichst zugfesten Festlegung des Kabelmantels insgesamt angeordnet ist. Über diese Einspannung des Kabelmantels wird ein gewisser Teil der beim Einziehen der Übertragungsstrecke vom Anschlußgehäuse auf das Kabel auszuübenden Zugkraft abgestützt Im Hinblick auf die Bruchempfindlichkeit der die Lichtwellenleiter bildenden Glasfasern ist die zulässigerweise maximal anwendbare Einspannkraft jedoch für eine Abstützung aller anzunehmenden Zugkräfte unzureichend, wesshalb in weiterer Ausgestaltung vorgesehen ist, daß der kegelförmige Aufteilungsraum zum freien Ende des Aufteilers hin durch eine Lochplatte abgeschlossen ist, welche über einen umlafenden Randsteg in eine entsprechend umlaufende Aufnahmenut im Gehäuse des Aufteilers eingreift und daß bei montierter Übertragungsstrecke eine zugkraftübertragende Einlage des Kabelmatels, ein sog. Keflar, zwischen dem Randsteg der Lochplatte und der Aufnahmenut des Gehäuses des Aufteilers klemmmend eingespannt ist.
Zur problemlosen Aufteilung der einzelnen Lichtwellenleiter innerhalb des Aufteilungsraumes des Aufteilers enden sowohl der Kabelmantel des Lichtwellenleiterkabels als auch die Hüllrohre der einzelnen im Lichtwellenleiterkabel gebündelten Lichtwellenleiter im Bereich des Überganges zwischen dem zylindrischen Kabeleinführungsraum und dem kegelförmigen Aufteilungsraum, derart, daß die die Lichtwellenleiter bildenden Glastfasern innerhalb des Aufteilungsraumes freiliegend geführt und gegebenenfalls mit geringfügiger Überlänge versehen sind.
Im Anschluß an den Aufteiler sind die zugkraftentlasteten und an ihrem freien Ende mit Steckern ausgerüsteten Lichtwellenleiter innerhalb des Anschlußgehäuses wiederum in Hüllroheren aufgenommen, wozu im Einzelnen vorgesehen ist, daß die den bezüglich des Anschlußgehäuses innenliegenden Abschluß des Aufteilers bildende Lochplatte mit einer der Anzahl der Einzelleiter des Kabels enstprechenden Anzahl von in regelmäßigen Abständen zueinander angeordneten Lochdurchbrüchen versehen ist und daß an der Außenseite der Lochplatte in Verlängerung deren Lochdurchbrüche mittels Klebung oder Klemmung mit der Lochplatte verbundene Hüllrohre für die einzelnen Lichtwellenleiter angeschlossen sind.

Hinsichtlich der Ausgestaltung der Anschlußgehäuse ist in weiterer Ausgestaltung der Erfindung vorgesehen, daß diese jeweils aus einem im Wesentlichen schalenförmigen Gehäusekörper und einer dessen offene Seite übergreifenden Frontplatte bestehen, wobei der schalenförmige Gehäusekörper in Annäherung an eine teilkreisförmige Querschnittsform eine trapezförmige Querschnittsform besitzt und wenigstens eine zum Gehäuse inneren hin geneigt angeordnete Stirnwandung aufweist und daß der Aufteiler an der zum Gehäuse inneren hin geneigten Stirnwandung des Anschlußgehäuses befestigt ist. Eine von einer reinen Teilkreisform abweichende Querschnittsform dient der Ausbildung von Anlageflächen, über welche die Anschlußgehäuse in den zugehörigen Aufnahmen der sie aufnehmenden Schränke oder dergl anliegen, so daß diese Formgebung bei entsprechender Gestaltung der Aufnahmen zugunsten der erfindungsgemäß auch bereits angestrebten und durch die Anwendung eines Aufteilers der vorgenannten Art grundsätzlich ermöglichten keinvolumigen Bauweise der Anschlußgehäuse auch verlassen werden kann. Ein besonderer Vorteil ergibt sich aus der zum Gehäuseinneren hin geneigten Ausbildung der den Aufteiler tragenden Stirnwandung des Anschlußgehäuses dadurch, daß jeder scharfe Biegungswinkel des Lichtwellenleiterkabels vermieden wird.

An der die offene Seite des Anschlußgehäuses übergreifenden Frontplatte ist eine Vielzahl von Adaptern, insbesondere sog. Duplex-Adaptern angeordnet, welche jeweils eine mittels Verschraubung an der Frontplatte befestigte Durchführungskupplung und innenseitig eine Steckeraufnahme für an den freien Enden der einzelnen Lichtwellenleiter angeordnete Stecker aufweisen.

Eine besonders gut geeignete Vorrichtung zur Erleichterung der Installation der Übertragungsstrecke vor Ort und gleichzeitig zum beschädigungsfreien Transport der vorgefertigten Einheit besteht nach einem weiteren Merkmal der Erfindung darin, daß die Übertragungsstrecke eine vorgegebene Länge eines Lichtwellenleiterkabels mit beidendig in gleicher Weise angeschlossenen Anschlußgehäusen oder Verbindungseinrichtungen umfasst und insgesamt in installationsgerechter Anordnung auf einem Transport-und Montageträger angeordnet ist, wobei der Transport- und Montageträger eine Kabeltrommel für die Kabellänge und seitlich zu dieser angeordnete, insbsondere durch eine zur Seitenwandung des Kabeltrommelabschnittes vermittels Abstandshalter im Abstand und deckungsgleich angeordnete Schutzplatte abgedeckte Aufnahmen bzw. Halterungen für die mit der Kabellänge verbundenen Anschlußgehäuse oder dergl. Verbindungselemente aufweist, und wobei ferner Kabeltrommelabschnitt und Schutzplatte mit einer zentralen Durchgangsausnehmung versehen sind. Diese Anordnung ermöglicht es die gesamte Übertragungsstrecke absolut beschädigungsgeschützt zu transportieren und vor Ort auf einer für Kabeltrommeln üblichen Abrollvorrichtung aufzunehmen, derart, daß die übertragungsstrecke insgesamt wie ein übliches Kabel installiert werden kann, wozu es außerordentlich hilfreich ist, daß wenigstens das in Anschlußrichtung vorne liegende Anschlußgehäuse bzw. die entsprechende Verbindungseinrichtung eine dem Querschnitt eines mittels eines Bohrers oder dergl. rotierendem Werkzeug erstellbaren Durchgangsquerschnitt wenigstens annähernd angepasste insbesondere trapezförmige Querschnittsform aufweist und gegebenenfalls bereits werksseitig in einer Einziehverkappung angeordnet sowie samt dieser an der Seitenwandung des Kabeltrommelabschnittes gehaltert ist. In Verbindung mit einer solchen Transport- und Installationsausrüstung kann dann weiter vorgesehen sein, daß den Anschlußgehäusen, wenigstens aber dem in Anschlußrichtung vorne liegenden Anschlußgehäuse, eine ihre Frontplatte übergreifende haubenartige Schutzabdeckung zugeordnet ist.

Für eine hinsichtlich sowohl der Montage als auch der Demontage am Schrank oder Gestell bzw. Regal zuträgliche Weiterbildung des Erfindungsgegenstandes sieht vor, daß für die Festlegung der Anschlußgehäuse in Verlängerung deren Frontplatte und zu dieser parallel ausgerichtet sowohl am Anschlußgehäuse als auch am Schrank oder Regal, insbesondere mittes Verschraubung, lösbar festlegbare Plattenelemente vorgesehen sind, wobei im Einzelnen zweckmäßigerweise vorgesehen ist, daß die Länge der einem Anschlußgehäuse zugeordneten Frontplatte kleiner ist als die die lichte Länge des jeweiligen Anschlußgehäuses und daß die beiden einem Anschlußgehäuse zugeordneten Plattenelemente in ihrer montierten Lage in deren Verlängerung und in einer gemeinsamen Ebene mit der Frontplatte angeordnet sind. Dies ermöglicht es die Anschlußgehäuse bei deren Montage sowohl von deren Vorder-als auch von deren Rückseite her in die Schränke oder Regale einzusetzen bzw. aus diesen auszubauen.

Eine gegebenenfalls auch anwendbare Sonderform sieht dabei vor, daß an die Stirnseiten der Anschlußgehäuse mit diesen insbesondere lösbar verbundene Haltewinkel für deren Festlegung in einem Schrank oder einem Regal angeschlossen sind.

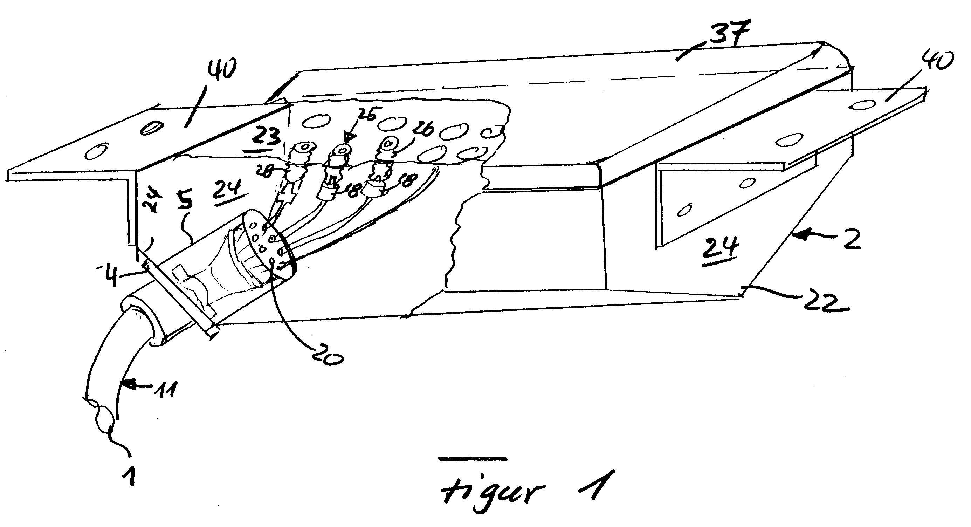

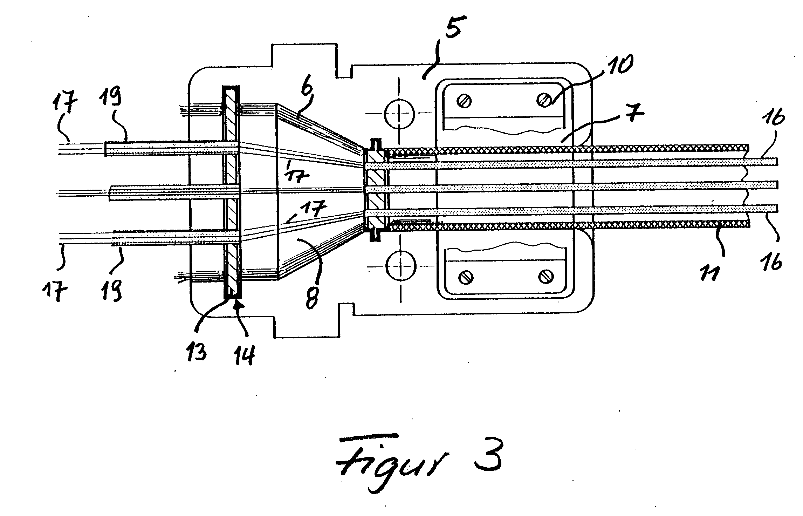

Die Erfindung ist in der nachfolgenden Beispielsbeschreibung anhand eines in der zeichnung dargestellten Ausführungsbeispieles im Einzelnen beschrieben. In der Zeichnung zeigt die
- Figur 1: eine teilweise aufgebrochene, schaubildliche Darstellung eines Anschlußgehäuses der Übertragungsstrecke;

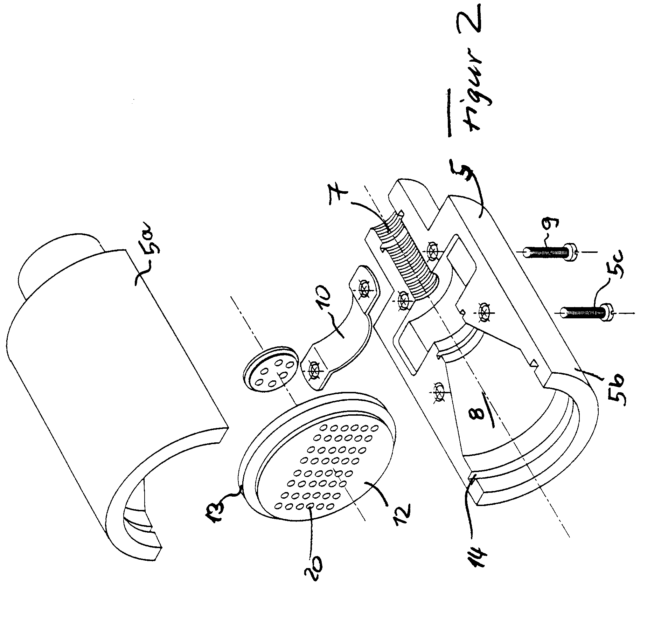

- Figur 2: eine Explosionsdarstellung des Gehäuses eines Aufteilers;
- Figur 3: eine Schnittdarstellung des Aufteilers nach Figur 2 bei montierten Lichtwellenleitern;
- Figur 4: eine schaubildliche Darstellung eines Transport-und Montageträgers für eine Übertragungssrecke.

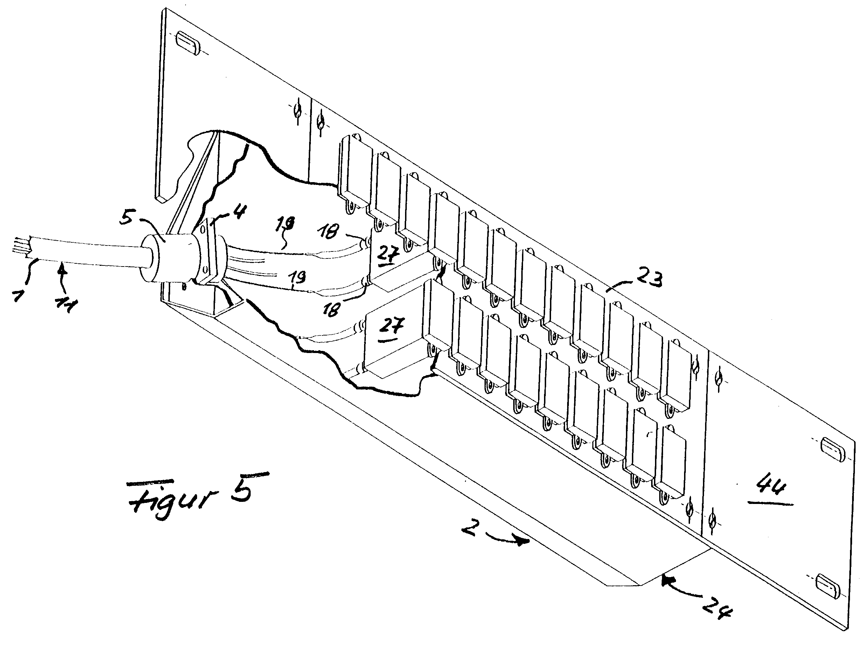

- Figur 5: eine teilweise aufgebrochene, schaubildliche Darstellung einer anderen Ausführungsform des Anschlußgehäuses der Übertragungsstrecke;
Die in der Zeichnung dargestellte Übertragungsstrecke besteht im Wesentlichen aus einer Länge eines Lichtwellenleiterkabels 1 und mit diesem zugfest verbundenen Anschlußgehäusen 2, wobei die zugfeste Verbindung des Lichtwellenleiterkabels 1 mit dem einen oder den beiden Anschlußgehäusen 2 durch einen Aufteiler 5 gebildet ist, welcher vermittels eines radial gerichteten Flansches 4 an einer der Stirnwandungen 24 des Anschlußgehäuses 2 abgestützt ist und in welchem andererseits eine zugfeste Einlage 6 des Lichtwellenleiterkabels 1, insbesondere ein sog. Keflar, zugfest festgelegt ist. Der im Allgemeinen mit 5 bezeichnete Aufteiler besteht aus einem Gehäuse mit einem zylindrischen Kabeleinführungsraum 7 und einem kegelförmigen Aufteilerraum 8, wobei im Kabeleinführungsraum 7 eine vermittels Schrauben 9 spannbare Klemmschelle 10 zur Festlegung des Kabelmantels 11 insgesamt angeordnet ist. Der kegelförmige Aufteilerraum 8 ist zum freien Ende des Aufteilers 5 hin durch eine Lochplatte 12 abgeschlossen, welche über einen umlaufenden Randsteg 13 in eine entsprechend umlaufende Aufnahmenut 14 im Gehäuse des Aufteilers 5 eingreift, wobei bei montierter Übertragungsstrecke eine zugkraftübertragende Einlage 6 des Kabelmatels, ein sog. Keflar, zwischen dem Randsteg 13 der Lochplatte 12 und der Aufnahmenut 14 des Gehäuses des Aufteilers 5 klemmmend eingespannt ist. Wie insbesondere aus der Darstellung der Figur 3 ersichtlich enden sowohl der Kabelmantel 11 des Lichtwellenleiterkabels 1 als auch die Hüllrohre 16 der einzelnen im Lichtwellenleiterkabel 1 gebündelten Lichtwellenleiter 17 im Bereich des Überganges zwischen dem zylindrischen Kabeleinführungsraum 7 und dem kegelförmigen Aufteilerraum 8, derart, daß die die Lichtwellenleiter bildenden Glastfasern 17 innerhalb des Aufteilerraumes 8 freiliegend geführt sind. Im Anschluß an den Aufteiler 5 sind die an ihrem freien Ende mit Steckern 18 ausgerüsteten Lichtwellenleiter innerhalb des Anschlußgehäuses 2 wiederum in Hüllrohren 19 aufgenommen. Die den bezüglich des Anschlußgehäuses 2 innenliegenden Abschluß des Aufteilers 5 bildende Lochplatte 12 mit einer der Anzahl der Einzelleiter 17 des Lichtwellenleiterkabels 1 enstprechenden Anzahl von in regelmäßigen Abständen zueinander angeordneten Lochdurchbrüchen 20 versehen ist und daß an der Außenseite der Lochplatte 12 in Verlängerung deren Lochdurchbrüche 20 mittels Klebung oder Klemmung mit der Lochplatte 12 verbundene Hüllrohre 19 für die einzelnen Lichtwellenleiter 17 angeschlossen sind. Der Aufteiler 5 besteht aus einem zweiteiligen Gehäuse, dessen beide Hälften 5a und 5b mittels Schrauben 5c miteinander verbindbar sind.

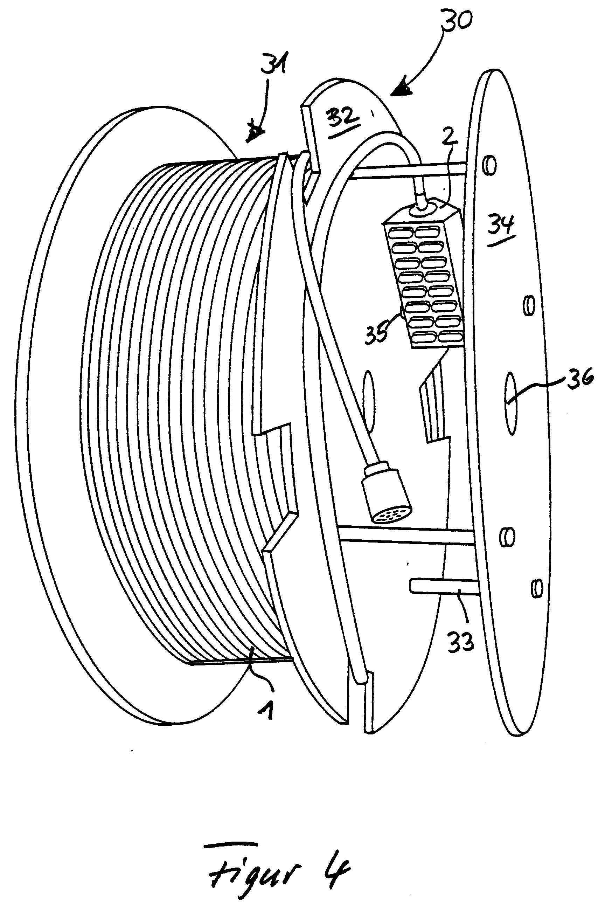

Die Anschlußgehäuse 2 bestehen jeweils aus einem im Wesentlichen schalenförmigen Gehäusekörper 22 und einer dessen offene Seite übergreifenden Frontplatte 23, wobei der schalenförmige Gehäusekörper 22 eine trapezförmige Querschnittsform besitzt und wenigstens eine zum Gehäuse inneren hin geneigt ausgerichtete Stirnwandung 24 aufweist, an der der Aufteiler 5 über seinen radial gerichteten Flansch befestigt ist. An der die offene Seite des Anschlußgehäuses 2 übergreifenden Frontplatte 23 ist eine Vielzahl von Adaptern 25, insbesondere sog. Duplex-Adaptern angeordnet, welche jeweils eine mittels Verschraubung 26 an der Frontplatte 23 befestigte Durchführungskupplung 27 und eine Steckeraufnahme 28 für die an den freien Enden der einzelnen Lichtwellenleiter 17 angeordnete Stecker 18 aufweisen.
Eine solchermaßen aufgebaute und samt aller erforderlichen Anschlußmittel werksseitig vormontierte Übertragungsstrecke kann im Zuge Ihrer Installation vor Ort ohne weiteres einfach durch Wandungs-oder Deckendurchbrüche innerhalb des Gebäudes hindurchgezogen werden, so daß sich Montagearbeiten vor Ort nur noch die Befestigung der Anschlußgehäuse in einem dafür vorgesehenen Schrank oder dergl. beschränken. Hierzu und zum Schutz vor Beschädigung während des Transportes ist die Übertragungsstrecke insgesamt und in installationsgerechter Anordnung auf einem aus der Darstellung der Figur 4 ersichtlichen Transport-und Montageträger 30 angeordnet, welcher eine Kabeltrommel 31 für die Kabellänge 1 und seitlich zu dieser angeordnete, insbsondere durch eine zur Seitenwandung 32 des Kabeltrommelabschnittes 31 vermittels Abstandshalter 33 im Abstand und deckungsgleich angeordnete Schutzplatte 34 abgedeckte Aufnahmen bzw. Halterungen 35 für die mit der Kabellänge 1 verbundenen Anschlußgehäuse 2 aufweist, und welcher zur Aufnahme auf einem Abrollgestell oder dergl Einrichtung mit einer zentralen Durchgangsausnehmung 36 versehen ist. Dem in Installationsrichtung vorne liegenden Anschlußgehäuse 2, ist eine seine Frontplatte übegreifende haubenartige Schutzabdeckung 37 zugeordnet.

Für eine erleichterte Montage bzw. Demontage an Schrank oder Regal sind in beidseitiger Verlängerung der Frontplatte des Anschlußgehäuses Plattenelemente 44 vorgesehen, die sowohl mit der Frontseite des Anschlußgehäuses als auch mit den zugehörigen Aufnahme-bzw. Halteleisten des Schrankes bzw. Regales verschraubbar sind, in der Weise, daß die Anschlußgehäuse wahlweise von deren Vorder-oder deren Hinterseite her in den Schrank bzw. das Regal eingesetzt und dort befestigt werden können.

Zur Montage bzw. Festlegung der Anschlußgehäuse im Schrank bzw. Regal kann aber auch vorgesehen sein, daß mit ihrem einen Schenkel in Verlängerung der Frontplatte der Anschlußgehäuse ausgerichtete, an die Stirnwandungen der Anschlußgehäuse 2 anschließbare, mit diesen insbesondere lösbar, verbundene Haltewinkel 40 angeordnet.

## Patentansprüche

1. Übertragungsstrecke für mit Lichtwellenleitern bestückte Anlagen, deren Verteiler- und Verbindungsstellen räulich voneinander getrennt, insbesondere in verschiedenen Räumen eines Gebäudes aufgestellt, sind und aus jeweils eine Anzahl von einzelne Anschlußgehäuse aufnehmenden Schränken oder Gestellen bestehen, wobei in jedes der Anschlußgehäuse jeweils ein zu einem Kabel zusammengefasstes Lichtwellenleiterbündel mündet und die einzelnen Lichtwellenleiter des Bündels innerhalb des Anschlußgehäuses aufgeteilt und mit an einer Frontplatte des Anschlußgehäuses angeordneten Anschlußadaptern oder dergl. Verbindungselemente verbunden sind, dadurch gekennzeichnet, daß sie aus einer insgesamt vormontierten Einheit aus Lichtwellenleiterkabel (1) und mit diesem zugfest verbundenen Anschlußgehäusen (2) bzw. Verbindungselementen besteht, wobei die zugfeste Verbindung des (1) Kabels mit dem oder den schalenförmigen Anschlußgehäuse(n) (2) bzw. dem oder den Verbindungselement(en) durch einen Aufteiler (5) gebildet ist, welcher einerseits vermittels eines radial gerichteten Flansches (4) an einer der Stirnwandungen des Anschlußgehäuses (2) bzw. des Verbindungselementes abgestützt ist und in welchem andererseits die zugfeste Einlage (6) des Kabels (1), Keflar, zugfest festgelegt ist.

2. Übertragungsstrecke nach Anspruch 1, dadurch gekennzeichnet, daß der Aufteiler (5) aus einem Gehäuse mit einem zylindrischen Kabeleinführungsraum (8) und einem kegelförmigen Aufteilerraum (8) besteht.

3. Übertragungsstrecke nach Anspruch 1 und 2, dadurch gekennzeichnet, daß im zylindrischen Kabeleinführungsraum (7) eine vermittels Schrauben (9) spannbare Klemmschelle (10) zur möglichst zugfesten Festlegung des Kabelmantels (11) insgesamt angeordnet ist.

4. Übertragungsstrecke nach Anspruch 1 bis 3, dadurch gekennzeichnet, daß der kegelförmige Aufteilungsraum (8) zum freien Ende des Aufteilers (5) hin durch eine Lochplatte (12) abgeschlossen ist, welche über einen umlafenden Randsteg (13) in eine entsprechend umlaufende Aufnahmenut (14) im Gehäuse des Aufteilers (5) eingreift und daß bei montierter Übertragungsstrecke eine zugkraftübertragende Einlage (6) des Kabelmatels, ein sog. Keflar, zwischen dem Randsteg (13) der Lochplatte (12) und der Aufnahmenut (14) des Gehäuses des Aufteilers (5) klemmmend eingespannt ist.

5. Übertragungsstrecke nach Anspruch 1 bis 4, dadurch gekennzeichnet, daß der Kabelmatel (11) im Bereich des überganges zwischen dem zylidrischen (7) und dem kegelförmigen (8) Raum endet.

6. Übertragungsstrecke nach Anspruch 1 bis 5, dadurch gekennzeichnet, daß die Hüllrohre (16) bildenden Kunststoffummantelungen der einzelnen Lichtwellenleiter (17) des Kabels (1) im Bereich deren Eintrittes in den kegelförmigen Aufteilerraum (8) enden.

7. Übertragungsstrecke nach Anspruch 1 bis 6, dadurch gekennzeichnet, daß die Lochplatte (12) mit einer der Anzahl der Einzelleiter (17) des Kabels (1) enstprechenden Anzahl von in regelmäßigen Abständen zueinander angeordneten Lochdurchbrüchen (20) versehen ist und daß an der Außenseite der Lochplatte (12) in Verlängerung deren Lochdurchbrüche (20) mittels Klebung oder Klemmung mit der Lochplatte (12) verbundene Hüllrohre (19) für die einzelnen Lichtwellenleiter (17) angeschlossen sind.

8. Übertragungsstrecke nach Anspruch 1 bis 7, dadurch gekennzeichnet, daß das Gehäuse des Aufteilers (5) insgesamt aus zwei miteinander über Verbindungsschrauben (5c) miteinander verbundenen bzw. verbindbaren und zueinander weitgehend identisch ausgebildeten Hälften (5a und 5b) besteht.

9. Übertragungsstrecke nach Anspruch 1 bis 8, dadurch gekennzeichnet, daß die Anschlußgehäuse (2) jeweils aus einem im Wesentlichen schalenförmigen Gehäusekörper (22) und einer dessen offene Seite übergreifenden Frontplatte (23) bestehen, wobei der schalenförmige Gehäusekörper (22) in Annäherung an eine teilkreisförmige Querschnittsform eine trapezförmige Querschnittsform besitzt und wenigstens eine zum Gehäuse inneren hin geneigt angeordnete Stirnwandung (24) aufweist und daß der Aufteiler (5) an der zum Gehäuseinneren hin geneigten Stirnwandung (24) des Anschlußgehäuses (2) befestigt ist.

10. Übertragungsstrecke nach Anspruch 1 bis 8, dadurch gekennzeichnet, daß an der die offene Seite des Anschlußgehäuses (2) übergreifenden Frontplatte (23) eine Vielzahl von Adaptern, insbesondere sog. Dupplex-Adaptern (26) angeordnet ist, welche jeweils eine mittels Verschraubung an der Frontplatte (23) befestigte Durchführungskupplung (27) und innenseitig eine Steckeraufnahme für an den freien Enden der einzelnen Lichtwellenleiter (17) angeordnete Stecker (18) aufweisen.

11. Übertragungsstrecke nach Anspruch 1 bis 10, dadurch gekennzeichnet, daß sie eine vorgegebene Länge eines Lichtwellenleiterkabels mit beidendig in gleicher Weise angeschlossenen Anschlußgehäusen oder Verbindungseinrichtungen umfasst und insgesamt in installationsgerechter Anordnung auf einem Transport-und Montageträger angeordnet ist.

12. Übertragungsstrecke nach Anspruch 1 bis 11, dadurch gekennzeichnet, daß der Transport- und Montageträger eine Kabeltrommel für die Kabellänge und seitlich zu dieser angeordnete, insbsondere durch eine zur Seitenwandung des Kabeltrommelabschnittes vermittels Abstandshalter im Abstand und deckungsgleich angeordnete Schutzplatte abgedeckte Aufnahmen bzw. Halterungen für die mit der Kabellänge verbundenen Anschlußgehäuse oder dergl. Verbindungselemente aufweist, wobei Kabeltrommelabschnitt und Schutzplatte mit einer zentralen Durchgangsausnehmung versehen sind.

13. Übertragungsstrecke nach Anspruch 1 bis 12, dadurch gekennzeichnet, daß wenigstens das in Anschlußrichtung vorne liegende Anschlußgehäuse bzw. die entsprechende Verbindungseinrichtung eine dem Querschnitt eines mittels eines Bohrers oder dergl. rotierendem Werkzeug erstellbaren Durchgangsquerschnitt wenigstens annähernd angepasste insbesondere trapezförmige Querschnittsform aufweist und gegebenenfalls bereits werksseitig in einer Einziehverkappung angeordnet sowie samt dieser an der Seitenwandung des Kabeltrommelabschnittes gehaltert ist.

14. Übertragungsstrecke nach Anspruch 1 bis 13, dadurch gekennzeichnet, daß den Anschlußgehäusen (2), wenigstens aber dem in Anschlußrichtung vorne liegenden Anschlußgehäuse, eine ihre Frontplatte (23) übergreifende haubenartige Schutzabdeckung (37) zugeordnet ist.

15. Übertragungsstrecke nach Anspruch 1 bis 14, dadurch gekennzeichnet, daß an die Stirnseiten der Anschlußgehäuse (2) mit diesen insbesondere lösbar verbundene Haltewinkel (4) für deren Festlegung in einem Schrank oder einem Regal angeschlossen sind.

16. Übertragungsstrecke nach Anspruch 1 bis 14, dadurch gekennzeichnet, daß für die Festlegung der Anschlußgehäuse (2) in Verlängerung deren Frontplatte (23) und zu dieser parallel ausgerichtet bzw. fluchtend sowohl am Anschlußgehäuse (2) als auch am Schrank oder Regal, insbesondere mittes Verschraubung, lösbar festlegbare Plattenelemente (44) vorgesehen sind.

17. Übertragungsstrecke nach Anspruch 16, dadurch gekennzeichnet, daß die Länge der einem Anschlußgehäuse (2) zugeordneten Frontplatte (23) kleiner ist als die die lichte Länge des jeweiligen Anschlußgehäuses (2) und daß die beiden einem Anschlußgehäuse zugeordneten Plattenelemente (44) in ihrer montierten Lage in deren Verlängerung und in einer gemeinsamen Ebene mit der Frontplatte (23) angeordnet sind.
